# EUROPEAN PATENT APPLICATION

(11) **EP 1 205 140 A1**
(43) Date of publication of application: **15.05.2002**
(21) Application number: 01204294.1
(22) Date of filing: 12.11.2001
(51) Int. Cl.: A47J 43/14

(54) **Separation apparatus for separating egg white and egg yolk**

(30) Priority: 13.11.2000 NL 1016599
(71) Applicant: Coenraadts Machinefabriek B.V., 1505 HK Zaandam (NL)
(72) Inventor: Coenraadts, Jacobus Willem Karel, 1511 CG Oostzaan (NL)
(74) Representative: Van Breda, Jacobus

(57) **Abstract**

The invention relates to a separation apparatus (1) for separating egg whites and egg yolks of eggs from which the shell has been removed, comprising a receiving trough (3) for the eggs, a separating trough (5) for effecting the separation between the egg white and the egg yolk, wherein the separating trough (5) has a slot (6) to allow egg white to seep through, and a guide trough (7) provided under the slot (6), terminating in or above a collecting device (8) for the egg white, and wherein the separating trough (5) is formed by at least two substantially transversely placed trough portions (5'5'') arranged such that the space between them forms the slot (6). At least one (5') of the two trough elements (5',5'') is mounted permanently and the other (5'') is adjustable for the simultaneous adjustment of the slot (6) and the incline of the adjustable trough element (5'') of the separating trough.

## Description

The invention relates to a separation apparatus for separating egg whites and egg yolks of eggs from which the shell has been removed, comprising a receiving trough for the eggs, a separating trough for effecting the separation between the egg white and the egg yolk and a collecting device for the egg white.

Such a separation apparatus is known from the Dutch patent 1010910 in the name of applicants. The known separation apparatus is a complex construction, comprises many parts and has a considerable building-in length. A drawback that is related to the largeness of the known apparatus is that bacteriologically it is relatively sensitive to contamination. In the known separation apparatus the receiving trough for the de-shelled eggs is succeeded by a further receiving trough with which a separation can be effected of eggs whose yolk is broken. This further receiving trough is subsequently succeeded by the separating trough.

A separation apparatus according to the preamble, wherein the separating trough has a slot to allow egg white to seep through, and a guide trough provided under the slot, terminating in or above a collecting device for the egg white, and wherein the separating trough is formed by at least two substantially transversely placed trough portions arranged such that the space between them forms the slot, is known from US-A-1,878,294.

The object of the invention is to provide a separation apparatus of a simple construction, having a short building-in length, and having bacteriologically and otherwise advantages that will be explained hereafter in more detail.

The separation apparatus according to the invention is characterized in that at least one of the two trough elements is mounted permanently and the other is adjustable for the simultaneous adjustment of the slot and the width of the separating trough. The simplicity of this construction, moreover affords the possibility of very simple operation, which in practice is of considerable importance for the realization of a high separation return in terms of yolk-free egg white obtained.

A further important aspect of the invention relates to the provision of a knife-edge at the downstream end of the slot of the separating trough. This promotes an adequate and clean separation of egg white and egg yolk.

It is further desirable that near the end of the guide trough a recording member be provided for the visual inspection of the egg white being transported through the guide trough, and that the recording member be coupled with a shut-off member, which in reaction to a signal from the recording member either shuts off or interrupts, or allows the throughput of egg white to the collecting device. With such a provision the separation apparatus is able to realize a very high separation return.

A convenient embodiment of the shut-off member is one wherein the same is embodied as a pivoting guide section at the end of the guide trough, which, if the recording member detects an irregularity in the egg white, will pivot such that the throughput of egg white to the collecting device is shut off, and which at the absence of such an irregularity, will allow the throughput of egg white to the collecting device.

The invention will now be further elucidated with reference to the drawing, which
in Figure 1 shows a schematic side view of the separation apparatus according to the invention; and
in Figure 2 shows a cross section of the separating trough of the separation apparatus according to the invention.

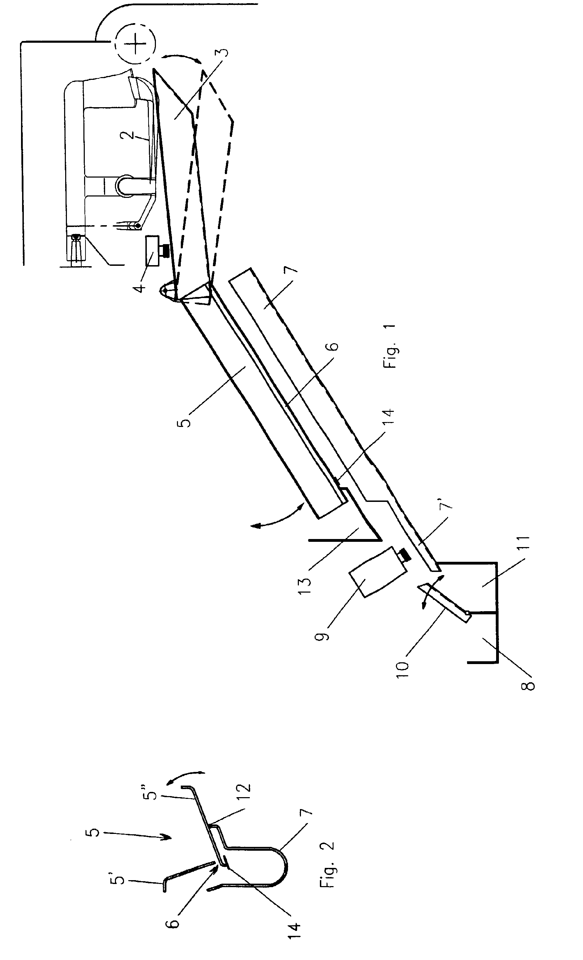

The separation apparatus shown in Figure 1 is generally indicated by reference number 1, and comprises underneath a separating component for shells and eggs from which such shells have been removed, a receiving trough 3, which works together with an odour detector 4. If the odour detector 4 detects an egg that is not fresh, an operating device (not shown) connected with the detector 4 is activated, which tilts the receiving trough 4 into the position indicated by the dotted lines, in order to remove the eggs that are not fresh. If necessary, the receiving trough 3 may then first be replaced or cleaned in order to avoid any contamination of the part of the separation apparatus 1 that succeeds the receiving trough 3. Immediately after the receiving trough 3 follows a separating trough 5, with which the eggs supplied via the receiving trough 3 are separated into egg white and egg yolk. Underneath the separating trough 5, in particular underneath the slot 6 of the separating trough 5, a guide trough 7 is provided via which egg white from the separating trough 5 can be guided onward to a collecting device 8 for the egg white. The egg yolk is discharged via trough 13.

Figure 1 further shows that near an end 7' of the guide trough 7 a recording member in the form of a camera 9 is provided for the visual inspection of the egg white transported through the guide trough 7. Such a visual inspection is based on the analysis of red, green and blue signal components, as well as the translucence of the inspected egg white. The camera 9 is controllingly coupled with a shut-off member 10, which in reaction to a signal from the camera 9 either shuts off or interrupts, or allows the egg white to be transported to the collecting device 8. Instead of the camera it is, of course, also possible to use a suitable sensor. Figure 1 shows a very suitable embodiment, wherein the shut-off organ 10 is embodied as a guide section at the end 7' of the guide trough 7 which, if the camera detects an irregularity in the egg white, will pivot as shown in the figure, thereby shutting off the throughput of egg white from the guide trough 7 to the collecting device 8. This substandard egg white, which may contain for example, a portion of the egg yolk, will then be guided to a collecting trough 11. If the camera detects egg white that meets the relevant quality standards, the shut-off member embodied as guide section will move to form an extension of the guide trough 7, enabling the egg white to flow to the collecting device 8.

Figure 2 shows a cross section of the separating trough 5. This figure clearly shows that the separating trough 5 is comprised of two, in relation to one another substantially transversely placed trough portions 5' and 5'', which are arranged with a slot 6-forming space between them. Desirably one of the trough portions, for example trough portion 5', is mounted permanently, while the other trough portion 5'' is adjustable, e.g. about a pivoting point 12. In this way it is possible to simultaneously adjust both the width of the slot 6 and the incline of the trough portion 5'', which is convenient with respect to the operational ease thus provided. Such a correlated adjustment of the slot width and the incline of the trough portion 5'' is desirable, especially with regard to the processing of fresh eggs. At the downstream end of the slot 6 of the separating trough 5 a knife-edge 14 is provided. This promotes the separation of egg white and egg yolk at the end of the slot 6.

## Claims

1. A separation apparatus (1) for separating egg whites and egg yolks of eggs from which the shell has been removed, comprising a receiving trough (3) for the eggs, a separating trough (5) for effecting the separation between the egg white and the egg yolk, wherein the separating trough (5) has a slot (6) to allow egg white to seep through, and a guide trough (7) provided under the slot (6), terminating in or above a collecting device (8) for the egg white, and wherein the separating trough (5) is formed by at least two substantially transversely placed trough portions (5', 5'') arranged such that the space between them forms the slot (6), **characterized in that** at least one (5') of the two trough elements (5', 5'') is mounted permanently and the other (5'') is adjustable for the simultaneous adjustment of the slot (6) and the incline of the adjustable trough element (5'') of the separating trough.

2. A separation apparatus according to one of the preceding claims, **characterized in that** at the downstream end of the slot (6), the separating trough (5) is provided with a knife-edge (14).

3. A separation apparatus according to claim 1 or 2, **characterized in that** near the end (7') of the guide trough (7) a recording member (9) is provided for the visual inspection of the egg white being transported through the guide trough (7), and that the recording member is coupled with a shut-off member (10), which in reaction to a signal from the recording member (9) either shuts off or interrupts, or allows the throughput of egg white to the collecting device (8).

4. A separation apparatus according to claim 3, **characterized in that** the shut-off member (10) is embodied as a pivoting guide section at the end (7') of the guide trough (7), which, if the recording member detects an irregularity in the egg white, will pivot such that the throughput of egg white to the collecting device is shut off, and which at the absence of such an irregularity, will allow the throughput of egg white to the collecting device (8).
